(19) Europäisches Patentamt
European Patent Office
Office européen des brevets

(11) **EP 1 960 826 B1**

(12) **FASCICULE DE BREVET EUROPEEN**

(45) Date de publication et mention
de la délivrance du brevet:
**15.02.2012 Bulletin 2012/07**

(21) Numéro de dépôt: **06841911.8**

(22) Date de dépôt: **12.12.2006**

(51) Int Cl.:
**G02C 7/06** (2006.01)

(86) Numéro de dépôt international:
**PCT/FR2006/002707**

(87) Numéro de publication internationale:
**WO 2007/068818 (21.06.2007 Gazette 2007/25)**

(54) **PROCEDE DE DETERMINATION D'UNE LENTILLE OPHTALMIQUE PROGRESSIVE**

VERFAHREN ZUR BESTIMMUNG EINES PROGRESSIVEN BRILLENGLASES

METHOD FOR DETERMINING A PROGRESSIVE OPHTHALMIC LENS

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **13.12.2005 FR 0512586**

(43) Date de publication de la demande:
**27.08.2008 Bulletin 2008/35**

(73) Titulaire: **ESSILOR INTERNATIONAL (Compagnie Générale d'Optique) 94227 Charenton Cédex (FR)**

(72) Inventeurs:
• **DROBE, Bjorn**
  **F-94220 Charenton-le-Pont (FR)**
• **PEDRONO, Claude**
  **F-94220 Charenton-le-Pont (FR)**

(74) Mandataire: **Hirsch & Associés 58, avenue Marceau 75008 Paris (FR)**

(56) Documents cités:
**US-A1- 2003 107 707**

• **SCHULDT, STFANIE: "ysis- Natürliches Sehen erleben" DEUTSCHE OPTIKERZEITUNG, no. 5-2004, mai 2004 (2004-05), pages 38-43, XP002398937 Heidelberg, DE**

EP 1 960 826 B1

**Description**

La présente invention a pour objet un procédé de détermination d'une lentille ophtalmique progressive ; en particulier d'une lentille progressive personnalisée aux besoins spécifiques d'un porteur donné.

Toute lentille ophtalmique, destinée à être portée dans une monture, est associée à une prescription. La prescription en matière ophtalmique peut comprendre une prescription de puissance, positive ou négative, ainsi qu'une prescription d'astigmatisme. Ces prescriptions correspondent à des corrections à apporter au porteur des lentilles pour corriger les défauts de sa vision. Une lentille est montée dans la monture en fonction de la prescription et de la position des yeux du porteur par rapport à la monture.

Pour les porteurs presbytes, la valeur de la correction de puissance est différente en vision de loin et en vision de près, du fait des difficultés d'accommodation en vision de près. La prescription est alors composée d'une valeur de puissance en vision de loin et d'une addition (ou progression de puissance) représentative de l'incrément de puissance entre la vision de loin et la vision de près; ceci revient à une prescription de puissance en vision de loin et à une prescription de puissance en vision de près. Les lentilles adaptées aux porteurs presbytes sont des lentilles multifocales progressives; ces lentilles sont décrites par exemples dans FR-A-2 699 294, US-A-5 270 745 ou US-A-5 272 495, FR-A-2 683 642, FR-A-2 699 294 ou encore FR-A-2 704 327.

Les lentilles ophtalmiques multifocales progressives comprennent une zone de vision de loin, une zone de vision de près, une zone de vision intermédiaire, une méridienne principale de progression traversant ces trois zones. Elles sont généralement déterminées par optimisation, à partir d'un certain nombre de contraintes imposées aux différentes caractéristiques de la lentille. La plupart des lentilles commercialisées sont généralistes, en ce qu'elles sont adaptées aux différents besoins courants des porteurs.

On définit des familles de lentilles multifocales progressives, chaque lentille d'une famille étant caractérisée par une addition, qui correspond à la variation de puissance entre la zone de vision de loin et la zone de vision de près. Plus précisément, l'addition, notée A, correspond à la variation de puissance entre un point VL de la zone de vision de loin et un point VP de la zone de vision de près, qui sont appelés respectivement point de contrôle de la vision de loin et point de contrôle de la vision de près, et qui représentent les points d'intersection du regard et de la surface de la lentille pour une vision à l'infini et pour une vision de lecture.

Une lentille présente aussi classiquement une croix de montage CM. Il s'agit d'un point qui est matérialisé sur la surface de la lentille et qui est utilisé par l'opticien pour le montage de la lentille dans la monture. La croix de montage CM correspond au point d'intersection de la face avant de la lentille avec la direction primaire du regard du porteur. Pour une lentille ophtalmique progressive, on définit aussi une longueur de progression LP comme la distance verticale entre la croix de montage CM, et un point de la méridienne sur lequel la progression de puissance atteint la puissance A.

Des lentilles de même addition diffèrent par la valeur de la sphère moyenne en un point de référence, appelée aussi base. Communément, la base d'une lentille est liée à la courbure d'une face de la lentille et est donnée par l'expression $(n-1)/R$ où n est l'indice de réfraction et R le rayon de courbure exprimé en mètres, la puissance moyenne dépend de la courbure de l'autre face de la lentille. On peut par exemple choisir de mesurer la base au point VL de contrôle de la vision de loin. On définit ainsi par le choix d'un couple (addition, base) un ensemble ou jeu de faces avant asphériques pour lentilles multifocales progressives. Habituellement, on peut ainsi définir 5 valeurs de bases et 12 valeurs d'additions, soient soixante faces avant. Dans chacune des bases, on réalise une optimisation pour une puissance donnée. Cette méthode connue permet, à partir de lentilles semi-finies, dont seule une face est conformée, de préparer des lentilles adaptées à la plupart des porteurs, par simple usinage de l'autre face sphérique ou torique.

Ainsi, les lentilles multifocales progressives comportent habituellement une face asphérique complexe, qui peut être la face avant opposée au porteur des lunettes, et une face sphérique ou torique, qui peut être la face arrière dirigée vers le porteur des lunettes. Cette face sphérique ou torique permet d'adapter la lentille à l'amétropie de l'utilisateur, de sorte qu'une lentille multifocale progressive n'est généralement définie que par sa surface asphérique complexe. Comme il est bien connu, une surface asphérique est généralement définie par l'altitude de tous ses points. On utilise aussi les paramètres constitués par les courbures minimales et maximales en chaque point, ou plus couramment leur demi-somme et leur différence. Cette demi-somme et cette différence multipliées par un facteur n-1, n étant l'indice de réfraction du matériau de la lentille, sont appelées sphère moyenne et cylindre. Une lentille multifocale progressive peut ainsi être définie, en tout point de sa surface complexe, par des caractéristiques géométriques comprenant une valeur de sphère moyenne et une valeur de cylindre. La surface complexe de la lentille peut être située sur la face avant ou sur la face arrière ou répartie entre les deux faces, selon les techniques d'usinage utilisées.

Par ailleurs, une lentille multifocale progressive peut aussi être définie par des caractéristiques optiques prenant en considération la situation du porteur des lentilles. En effet, les lois de l'optique des tracés de rayons entraînent l'apparition de défauts optiques quand les rayons s'écartent de l'axe central de toute lentille. On s'intéresse classiquement aux aberrations dites défaut de puissance et d'astigmatisme. Ces aberrations optiques peuvent être appelées de façon générique défauts d'oblicité des rayons.

Les défauts d'oblicité des rayons ont déjà été bien identifiés dans l'art antérieur et des améliorations ont été proposées. Par exemple, le document WO-A-98 12590 décrit une méthode de détermination par optimisation d'un jeu de lentilles ophtalmiques multifocale progressives. Ce document propose de définir le jeu de lentilles en considérant les caractéristiques optiques des lentilles et notamment la puissance porteur et l'astigmatisme oblique, dans les conditions du porté. La lentille est optimisée par tracé de rayons, à partir d'un ergorama associant à chaque direction du regard dans les conditions du porté un point objet visé.

EP-A-0 990 939 propose aussi de déterminer une lentille par optimisation en tenant compte des caractéristiques optiques et non plus surfaciques de la lentille. On considère à cette fin les caractéristiques d'un porteur moyen, notamment pour ce qui est de la position de la lentille devant l'oeil du porteur en termes de galbe, d'angle pantoscopique et de distance verre-oeil.

Il a été constaté que chaque porteur présente un comportement verre-oeil différent. On a donc cherché, ces dernières années, à personnaliser les lentilles ophtalmiques progressives afin de répondre au mieux aux besoins de chaque porteur.

Par exemple, il est proposé, en particulier par les sociétés ZEISS et RODENSTOCK sous les références respectives Zeiss Individual et Impression ILT, de tenir compte, pour la définition de lentilles progressives, de la position réelle de la lentille devant l'oeil du porteur. A cette fin, on procède à des mesures de la position de la lentille dans la monture choisie par le porteur. La mesure de la position de la lentille par rapport à l'oeil du porteur est d'abord difficile à effectuer avec précision. Ensuite, l'optimisation s'effectue pour une position mesurée de la lentille devant l'oeil du porteur; or il s'avère que la position de la monture varie en fonction du temps et ne peut être considérée comme constante pour un porteur donné. Du fait de ces deux facteurs, la prise en compte de la position de la lentille ne semble pas apporter au porteur un confort supplémentaire par rapport à des solutions ne prenant en considération que la position moyenne de la lentille.

La demanderesse commercialise, sous la marque VARILUX IPSEO une gamme de verres progressifs, qui sont définis en fonction du comportement oeil-tête du porteur. Cette définition repose sur le constat que tout porteur, pour regarder différents points à une hauteur donnée dans l'espace objet, peut déplacer soit la tête, soit les yeux et que la stratégie de vision d'un porteur repose sur une combinaison des mouvements de la tête et des yeux. La stratégie de vision du porteur influe sur la largeur perçue des champs sur la lentille. Ainsi, plus la stratégie de vision latérale du porteur fait intervenir un mouvement de la tête, moins la zone de la lentille balayée par le regard du porteur est large. Si le porteur bougeait uniquement la tête pour regarder différents points à une hauteur donnée de l'espace objet, son regard passerait toujours par le même point de la lentille. Le produit VARILUX IPSEO propose donc des lentilles différentes, pour un même couple amétropie-addition, en fonction de la stratégie de vision latérale du porteur.

Dans le même ordre d'idée de personnaliser les lentilles ophtalmiques progressives aux besoins spécifiques de chaque porteur, la demande de brevet français déposée par la demanderesses sous le titre *Procédé de détermination d'une paire de lentilles ophtalmiques progressives* le 27 Août 2004 sous le numéro 04 09 144 propose de tenir compte du décalage du plan sagittal du porteur en vision de près pour la détermination des caractéristiques optiques des lentilles progressives.

La société RUPP & HUBRACH a par ailleurs proposé, sous la référence Ysis, de mesurer l'inclinaison de la tête pendant une tâche de vision de près pour déterminer le choix entre quatre longueurs de progression proposées. Cette mesure ne prend cependant pas complètement en compte le comportement oeil-tête car elle ne tient pas compte de l'abaissement total du regard qui peut être défini comme la somme de l'abaissement des yeux dans les orbites et de l'inclinaison de la tête.

Or, des mesures effectuées dans les laboratoires de la demanderesse montrent que l'abaissement privilégié du regard pendant une tâche de vision de près varie de manière sensible d'un individu à l'autre. Cet abaissement semble répondre à la recherche d'un confort visuel optimal dépendant de caractéristiques physiologiques et visuelles propres à chaque individu.

Il existe donc toujours un besoin d'une lentille qui satisfasse mieux les besoins spécifiques de chaque porteur individuel.

L'invention propose en conséquence de prendre en compte l'abaissement du regard préféré en vision de près pour un individu donné et de déterminer la participation de la tête dans cet abaissement par rapport à la participation des yeux afin de concevoir des lentilles progressives personnalisées aux besoins du porteur. Le porteur pourra ainsi conserver une posture naturelle tout en préservant son confort visuel.

L'invention propose plus particulièrement un procédé de détermination d'une lentille ophtalmique progressive pour un porteur donné auquel une addition de puissance (A) a été prescrite en vison de près, la lentille présentant une croix de montage matérialisant la direction primaire du regard dans les conditions du porté et une méridienne principale de progression entre une zone de vision de loin et une zone de vision de près, le procédé comprenant les étapes de :

mesure de l'abaissement du regard (R) du porteur sur un point visé en vision de près ;
mesure d'un horoptère (H) vertical du porteur en vision de près comme l'angle que fait l'abaissement du regard (R) avec un document contenant le point visé, ledit document formant un angle (B) avec l'horizontale ;

mesure de l'élévation de la tête (T) et/ou de l'élévation des yeux (Y) du porteur en vision de près ;

détermination d'un coefficient de participation vertical de la tête en vision de près ($Ptv_{vp}$) défini comme le rapport de l'élévation de la tête (T) sur l'abaissement du regard (R), $Ptv_{vp} = T/(R+B)$ ;

détermination d'une longueur de progression (LP) spécifique au porteur définie par la relation LP= H (1- $Ptv_{vp}$), la longueur de progression étant définie comme l'angle d'abaissement des yeux entre la croix de montage (CM) et le point de la méridienne pour lequel la puissance atteint l'addition de puissance (A) ;

détermination de la lentille par optimisation en calcul optique dans les conditions du porté, en utilisant comme cible une variation de puissance le long de la méridienne avec une longueur de progression égale à ladite longueur de progression spécifique au porteur.

Selon une caractéristique, l'étape de mesure de l'abaissement du regard (R) comprend les étapes de :

positionnement du porteur en lecture d'un document en vision de près ;

mesure de l'angle moyen dont la tête est abaissée pour parcourir le document et/ou mesure de l'angle moyen dont les yeux sont abaissés pour parcourir le document ;

identification du point visé par le porteur ;

mesure de l'angle formé entre un plan horizontal de l'espace et le plan contenant le point visé et les centres de rotation des yeux.

Selon une caractéristique, l'étape de mesure de l'abaissement du regard et l'étape de mesure de l'horoptère vertical sont confondues, le document contenant le point visé par le porteur étant positionné à plat sur un support horizontal.

Par l'invention on peut produire une lentille ophtalmique progressive personnalisée aux besoins d'un porteur donné, la lentille présentant une croix de montage (CM) matérialisant la direction primaire du regard dans les conditions du porté et une méridienne de progression sensiblement ombilique présentant une addition de puissance (A) entre un point de contrôle en vision de loin (VL) et un point de contrôle en vision de près (VP) ; la lentille présentant dans les conditions du porté, une puissance optique contrôlée le long de la méridienne avec une longueur de progression définie comme la distance verticale entre la croix de montage (CM) et le point de la méridienne pour lequel la puissance atteint l'addition (A), ladite longueur de progression de ladite lentille personnalisée étant déterminée par la relation suivante : LP= H (1- $Ptv_{vp}$); avec H, l'horoptère vertical dudit porteur en vision de près et $Ptv_{vp}$ ,le coefficient de participation vertical de la tête en vision de près dudit porteur.

Selon les modes de réalisation, la méridienne de progression présente une dérivée nulle pour un abaissement du regard dudit porteur compris entre 85° et 90° ; ou la puissance optique le long de la méridienne de progression augmente au-delà du point de référence en vision de près pour un abaissement du regard dudit porteur inférieur à 85°.

Par l'invention on peut produire un équipement visuel comportant au moins une lentille selon l'invention et un procédé de correction de la vision d'un sujet presbyte, comprenant la fourniture au sujet ou le port par le sujet d'un tel équipement.

D'autres avantages et caractéristiques de l'invention apparaîtront à la lecture de la description qui suit des modes de réalisation de l'invention, donnés à titre d'exemple et en référence aux dessins qui montrent:

- figure 1, un schéma d'un sujet dans un environnement sollicitant sa vision de près ;
- figure 2, un schéma illustrant la variation de l'horoptère vertical en fonction de la distance de visée pour un sujet donné ;
- figure 3, des graphes illustrant des profils de méridiennes pour différents coefficients de participation de la tête avec un horoptère vertical en vision de près constant ;
- figure 4, des graphes illustrant des profils de méridiennes pour différentes valeurs d'horoptère vertical en vision de près avec un abaissement de tête constant
- figure 5, des graphes illustrant des profils de méridiennes pour douze porteurs testés ;
- figure 6, un tableau donnant les caractéristiques de quatre porteurs qui pourraient se retrouver sur un bon de commandes pour des lentilles déterminées selon le procédé de l'invention ;
- figures 7a à 7e, les profils de méridiennes pour une lentille de l'art antérieur et pour des lentilles correspondant aux prescriptions des exemples de la figure 6 ;
- figures 8a à 8e, des cartes de puissance porteur pour une lentille de l'art antérieur et pour les lentilles correspondant aux prescriptions des exemples de la figure 6 ;
- figures 9a à 9e, des d'astigmatisme résultant pour une lentille de l'art antérieur et pour des lentilles correspondant aux prescriptions des exemples de la figure 6.

L'invention propose un procédé de détermination d'une lentille ophtalmique progressive pour un porteur presbyte, c'est-à-dire pour lequel une addition de puissance A a été prescrite pour la vision de près.

De manière connue en soi, une lentille progressive présente une zone de vision de loin avec un point de contrôle VL, une zone de vision de près avec un point de contrôle VP et une zone de vision intermédiaire. Une méridienne principale de progression traverse ces trois zones. La méridienne présente donc une progression de puissance entre le point de contrôle en vision de loin VL et le point de contrôle en vision de près VP ; cette progression correspond sensiblement à la valeur de l'addition prescrite A. Une croix de montage CM est matérialisée par un repère sur la surface complexe et constitue une aide au montage de la lentille détourée dans la monture ; cette croix de montage CM permet de repérer sur la lentille la direction primaire du regard dans les conditions du porté. Dans ce contexte, on appelle longueur de progression LP, la distance verticale entre la croix de montage CM et le point de la méridienne en vision de prés VP pour lequel la progression de puissance atteint la puissance A.

La longueur de progression LP définit l'accessibilité aux puissances nécessaires en vision de près. En effet, le profil de la méridienne représente la puissance porteur en fonction de l'abaissement des yeux dans les orbites avec une direction du regard droit devant. Ainsi, selon la valeur de la longueur de progression, le porteur devra plus ou moins abaisser les yeux pour pouvoir profiter pleinement de la zone de vision de près. Dans certains cas, cette accessibilité à la zone de vision de près peut se faire au prix d'un effort pour s'éloigner d'un port de tête naturel.

La présente invention propose de prendre en compte l'abaissement du regard préféré en vision de près pour un porteur donné, et plus spécifiquement la participation de la tête dans cet abaissement par rapport à celle des yeux, pour concevoir des lentilles ophtalmiques progressives propres à chaque individu afin que celui-ci puisse profiter pleinement de la compensation de sa presbytie sans effort dans une posture naturelle et en préservant son confort visuel. La prise en compte de tels paramètres individuels est aujourd'hui possible de manière industrielle grâce aux méthodes d'usinage direct des surfaces complexes constituant les lentilles progressives.

La demanderesse a constaté que chaque individu adopte une posture permettant d'avoir un confort visuel maximal en vision de près. En particulier, l'individu incline son document ou modifie l'élévation des yeux et de la tête si le document est posé sur un support, de façon le faire coïncider avec son horoptère vertical. L'horoptère vertical pour un point de fixation donné est défini ici comme le lieu des lignes verticales perçues binoculairement simples et verticales.

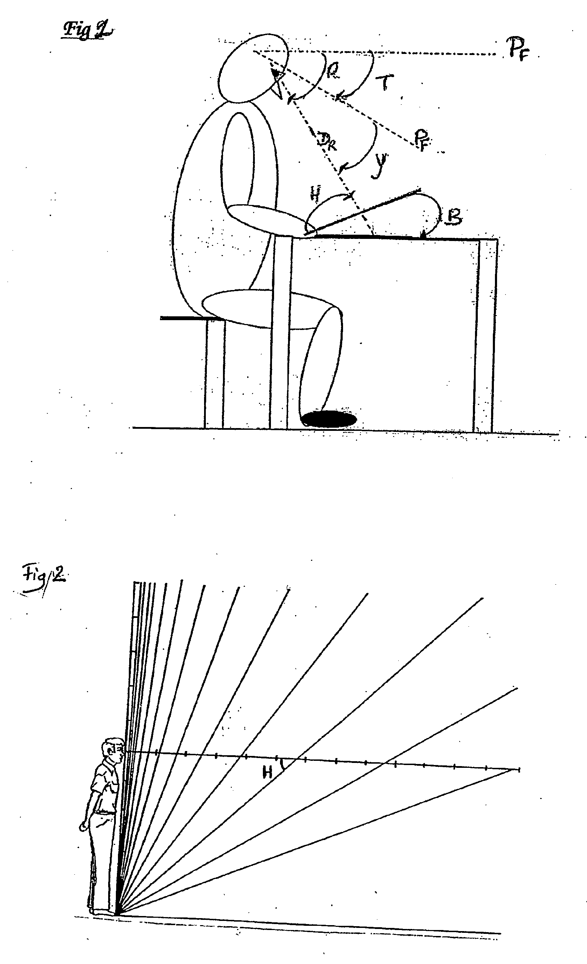

La figure 1 illustre schématiquement un porteur dans un environnement de lecture d'un document, c'est-à-dire dans lequel la vision de près du porteur est sollicitée. Le procédé selon l'invention propose de mesurer l'horoptère vertical en vision de près du porteur, c'est-à-dire l'angle que fait la direction du regard avec le document contenant le point visé, ainsi que l'abaissement du regard et l'élévation de la tête en vision de près et de déterminer un coefficient de participation vertical de la tête en vision de près afin de déterminer une longueur de progression spécifiquement adaptée au besoin de ce porteur. On définit le coefficient de participation vertical de la tête comme le rapport de l'élévation de la tête sur l'abaissement du regard. Le calcul de ce coefficient va être détaillé par la suite.

Les observations expérimentales de la demanderesse ont montré que pour explorer son environnement un individu bouge plus ou moins la tête et les yeux par des mouvements coordonnés. Les mouvements de la tête sont caractérisés dans un repère lié à l'espace ayant pour origine le centre de rotation de la tête. Les mouvements des yeux sont caractérisés dans des repères liés à la tête et ayant pour origine le centre de rotation de chacun des deux yeux. La direction du regard $D_R$ est caractérisée par rapport à un plan de référence lié à la tête et appelé plan de Francfort. Une définition du plan de Francfort est donnée dans les demandes de brevet FR-A-2 683 642 et FR-A-2 683 643 ; le plan de Francfort $P_F$ est le plan passant par le bord inférieur des orbites des yeux et par le tragion des oreilles du porteur. La direction du regard $D_R$ est une droite appartenant à un plan contenant le point visé et les centres de rotation des yeux.

En vision de loin, avec un point de visé droit devant à l'infini, la direction du regard est horizontale. En position naturelle, pour cette direction du regard en vision de loin, le plan de Francfort est horizontal ; l'amplitude des mouvements verticaux des yeux et de la tête est donc considérée nulle.

Lorsque le porteur quitte un point de visée en vision de loin pour atteindre un point de visée en vision de près, il abaisse les yeux et la tête dans des proportions respectives différentes selon les individus.

Dans ce contexte, on définit l'élévation de la tête comme l'angle T que fait le plan de Francfort $P_F$ avec un plan horizontal de l'espace et on définit l'élévation des yeux - ou l'élévation oculaire - comme l'angle Y que fait la direction du regard $D_R$ avec le plan de Francfort $P_F$. Les valeurs d'élévation des yeux ou de la tête sont donc des abaissements et sont exprimées avec des valeurs d'angles négatives. L'abaissement du regard R sera donc assuré par une élévation de la tête T et par une élévation des yeux. Plus spécifiquement R=T+Y. L'abaissement du regard R est donc l'angle formé entre le plan horizontal de l'espace et la direction du regard $D_R$.

Au voisinage du point de fixation, l'horoptère vertical peut être assimilé à une portion de plan plus ou moins inclinée d'un angle H par rapport à la direction de regard $D_R$. Du fait de l'équilibre musculaire, l'abaissement des yeux en vision rapprochée associé à la convergence entraîne une torsion des globes oculaires qui induit une modification des références verticales et horizontales du système visuel. L'horoptère vertical H varie donc avec l'élévation des yeux Y. La figure 2, tirée du manuel « Vergence eye movements : Basic & clinical aspects », de Clifton M. Schor et Kenneth J. Ciuffreda, p 557, paru en 1983, montre que l'horoptère vertical H, pour un sujet donné, varie avec la distance de visée.

L'horoptère vertical en vision de près est une grandeur qui varie d'un individu à l'autre en fonction de paramètres morphologiques, physiologiques et comportementaux ; en revanche, l'horoptère, pour une distance donnée, est sensiblement constant pour un individu donné. Ainsi, chaque individu se positionnera et/ou inclinera son document d'un angle B pour que le document fasse un angle voisin de son horoptère vertical avec la direction du regard $D_R$. Dans la suite, on considèrera que le document est placé à plat sur un support horizontal, c'est-à-dire que l'angle B est nul. L'horoptère vertical H et la direction du regard en vision de près auront donc la même valeur angulaire.

La plupart des lentilles ophtalmiques progressives commercialisées sont dites généralistes et sont calculées pour répondre aux besoins du plus grand nombre. Pour les gammes de produits n'offrant qu'une longueur de progression, un abaissement du regard moyen et une élévation des yeux moyenne ont été retenus comme valeurs standard. Pour les gammes de produits offrant plusieurs longueurs de progression, le prescripteur peut choisir celle qui correspond le mieux à l'élévation oculaire préférée du porteur, mais sans tenir compte de la valeur spécifique de l'horoptère vertical du porteur en vision de près.

Le procédé de l'invention propose de mesurer par des moyens appropriés la posture de vision de près de chaque porteur, notamment l'abaissement du regard R sur un point visé en vision de près, l'horoptère vertical H en vision de près et l'élévation de la tête T préférée pour une tâche en vision de près.

Ces grandeurs peuvent s'ajouter à d'autres grandeurs de personnalisation déjà connues, telles que le décalage du plan sagittal ou le décalage horizontal pour servir de données d'entrée à un programme d'optimisation optique qui permet le calcul des surfaces complexes des lentilles ophtalmiques progressives, tels que notamment les programmes décrits dans WO-A-98 12590 ou FR-A-2 858 693.

En particulier, l'invention propose de fournir une lentille ophtalmique progressive qui présente une progression de puissance le long de la méridienne spécifiquement adaptée aux besoins du porteur. En particulier, la longueur de progression de la méridienne, telle que définie plus haut, dépend de paramètres physiologiques spécifiques du porteur et la variation de puissance de la méridienne en dessous du point de contrôle en vision de près est également contrôlée en fonction des paramètres physiologiques du porteur.

La longueur de progression peut s'exprimer de la manière suivante :

$$LP = H \, (1 - Ptv_{vp})$$

avec H, l'horoptère vertical du porteur en vision de près ; et

$Ptv_{vp}$, le coefficient de participation de la tête dans l'abaissement du regard. Ce coefficient $Ptv_{vp}$ est égal au rapport de l'élévation de la tête sur l'abaissement du regard, soit $Ptv_{vp} = T/(R + B)$ ;

avec B, l'angle que forme le document contenant le point visé avec l'horizontale.

La longueur de progression est alors exprimée en degré et correspond à l'élévation des yeux au point de référence en vision de près.

La longueur de progression LP de la méridienne sur la surface complexe de la lentille ophtalmique selon l'invention tient ainsi compte de l'horoptère vertical du porteur en vision de près et de son coefficient de participation de la tête en vision de près afin de lui assurer un confort visuel optimal tout en lui permettant de conserver sa posture naturelle en vision de près.

Les mesures pour mettre en oeuvre le procédé selon l'invention peuvent être effectuées de la manière suivante.

L'environnement choisi est un environnement de bureau comme représenté sur la figure 1. Le porteur est placé à une table de travail, un document à plat sur la table (B=0). Il est positionné de façon telle que pour fixer le centre du document il abaisse les yeux et la tête pour que l'angle que fait le document avec la ligne de regard $D_R$ soit égal à l'horoptère vertical H en vision de près et que le document soit à une distance de vision de près préférée Dvp de ses yeux. Ce positionnement permet de placer le centre de rotation de la tête dans l'environnement. Ce point est alors considéré fixe. Pour décrire l'environnement du regard, la tête du porteur tournera autour de ce point, les yeux tourneront dans la tête.

Pour chaque point visé de l'environnement nous connaissons la proximité objet de ce point et nous mesurons l'abaissement du regard nécessaire et l'élévation de la tête. Nous pouvons en déduire le coefficient de participation de la tête. Par les méthodes d'optimisation optique précédemment mentionnées, nous pouvons calculer en chaque point de la lentille, la puissance requise pour que le porteur perçoive net ce point en utilisant comme cible le contrôle de la progression de puissance le long de la méridienne en fonction des paramètres physiologiques mesurés sur la porteur.

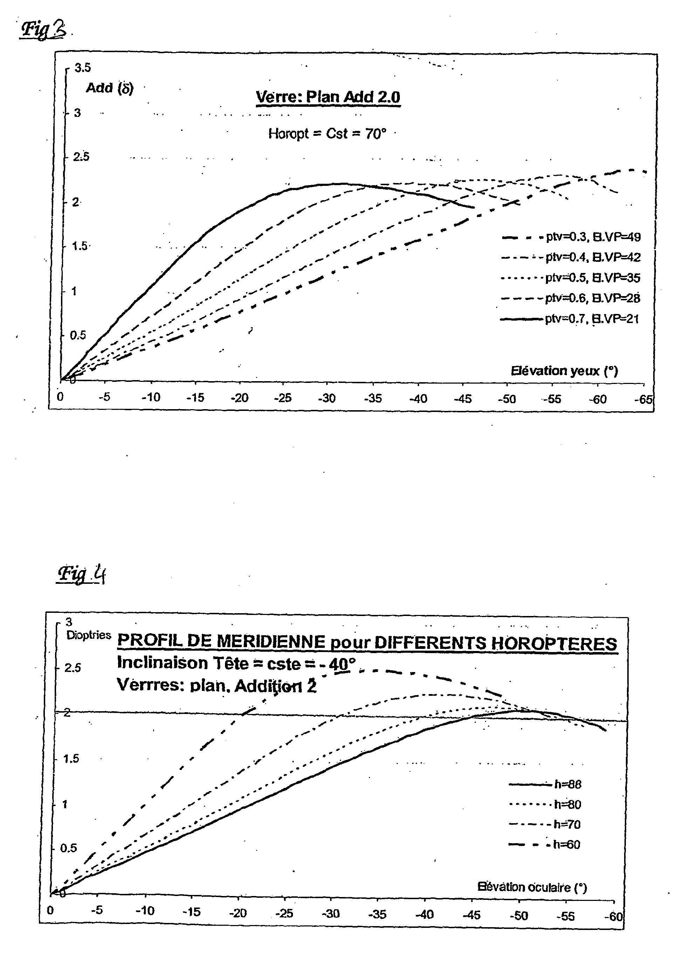

Les figures 3 et 4 représentent la puissance optique le long de la méridienne d'une lentille progressive d'addition nominale de 2 dioptries. Ces courbes sont appelées profils de progression, profils de méridienne ou profils de puissance. En abscisses, on a reporté l'élévation des yeux, c'est-à-dire l'abaissement des yeux derrière la lentille; et en ordonnées, on a reporté la puissance optique perçue par le porteur, l'origine étant rapportée à l'addition prescrite en vision de loin.

La figure 3 représente des profils de progression pour différents porteurs ayant le même horoptère vertical en vision de près de 70° et des coefficients de participation verticale de la tête Ptv différents. Chaque courbe correspond à une élévation des yeux en vision de près (El-VP) différente.

On constate que chaque porteur, bien qu'ayant le même horoptère vertical en vision de près, présente un comportement d'élévation de la tête et des yeux très différent pour atteindre l'addition de deux dioptries prescrite. Ainsi, un des porteurs abaissera les yeux de seulement 21° pour atteindre l'addition de 2 dioptries et avoir une vision nette en vision de près et bougera la tête en conséquence, alors qu'un autre porteur ne bougera que très peu la tête et abaissera des yeux de 49°.

Pour construire la figure 4, c'est l'élévation de la tête en vision de près qui a été maintenue constante et égale à 40° entre les porteurs présentant des valeurs d'horoptère vertical en vision de près différents.

On remarque que le profil de méridienne correspondant à l'horoptère vertical de 70° appartient à un sujet qui baisserait de préférence la tête de -40° et les yeux de -30° en vison de près pour atteindre l'addition de deux dioptries. Cet abaissement des yeux et de la tête ne correspond à aucun des profils de la figure 3.

Cette figure 4 nous montre bien que des sujets ayant tous une élévation de la tête préférée de -40° en vision de près peuvent présenter des profils de puissance requise différents en fonction de l'abaissement du regard préféré en vision de près. Par conséquent la prise en compte de l'horoptère vertical en vision de près du porteur est nécessaire pour répondre aux besoins de confort visuel et postural des différents porteurs.

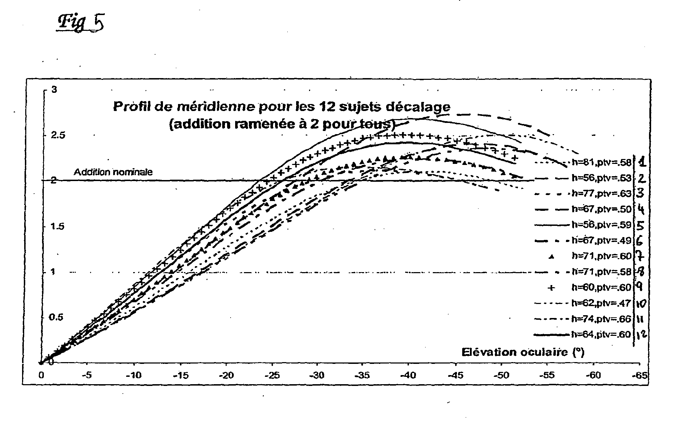

Pour construire la figure 5, des mesures de posture en vision de près ont été effectuées pour douze porteurs différents demandant une addition nominale de 2 dioptries.

Le tableau ci-dessous rappelle les valeurs mesurées pour l'abaissement de regard préféré en vision de près (horoptère vertical) en degrés, le coefficient de participation verticale de la tête en vision de près (ptv), l'élévation de la tête préférée en vision de près (tête) en degrés et l'élévation des yeux préférée des yeux en vision de près (yeux) en degrés. L'horoptère vertical et l'élévation de la tête ou des yeux sont mesurés pour chaque porteur, le coefficient de participation verticale de la tête en vision de près est alors déduit.

| Porteur | Horoptère | ptv | Tête | yeux |
|---------|-----------|------|-------|-------|
| 1 | -81.1 | 0.58 | -46.8 | -34.2 |
| 2 | -55.9 | 0.53 | -29:8 | -26.1 |
| 3 | -77.1 | 0.63 | -48.9 | -28.2 |
| 4 | -66.6 | 0.50 | -33.9 | -32.7 |
| 5 | -56.1 | 0.59 | -33.0 | -23.1 |
| 6 | -66.9 | 0.49 | -32.6 | -34.3 |
| 7 | -71.0 | 0.60 | -42.4 | -28.6 |
| 8 | -71.3 | 0.58 | -41.4 | -29.9 |
| 9 | -60.1 | 0.60 | -36.2 | -23.9 |
| 10 | -61.7 | 0.47 | -29.2 | -32.5 |
| 11 | -74.2 | 0.66 | -48.7 | -25.4 |
| 12 | -64.1 | 0.60 | -38.4 | -25.7 |

Ces mesures montrent la variabilité de la valeur de l'horoptère vertical entre les différents porteurs et l'absence de liaison entre cette valeur de l'horoptère vertical et l'élévation préférée de la tête et des yeux en vision de près.

La figure 5 montre la diversité des profils de puissance requise pour une même addition nominale. Par exemple, les porteurs 5, 9 et 11 présentent une élévation oculaire préférée du même ordre de grandeur et relativement faible. Ils demandent donc une courte longueur de progression. Mais leurs valeurs différentes d'horoptère vertical en vision de près entraînent des profils de puissance requise différents quand les yeux s'abaissent au-delà de cette valeur, pour une lecture en bas de page d'un document par exemple.

La présente invention propose donc de mesurer la posture en vision de près par un équipement approprié permettant, entre autre, la mesure de l'abaissement du regard préféré en vision de près et au moins de l'élévation préférée de la tête ou de l'élévation préférée des yeux en vision de près. Un tel équipement peut comprendre un capteur placé sur la tête du porteur et un élément permettant de repérer le point visé, tel qu'un capteur placé sur un stylo pointeur ou tout appareil permettant la mesure de la rotation des yeux dans leur repère.

Outre la prescription en vision de loin et la prescription en vision de près, ces paramètres physiologiques mesurés sont inscrits sur un bon de commande d'une paire de lentilles ophtalmiques associées ou non à d'autres grandeurs telles que le coefficient de participation horizontale de la tête, le décalage latéral du document en vision de près, les écarts pupillaires du porteur, l'angle pantoscopique de la monture, la distance verre-oeil et la taille de la monture choisie par le porteur.

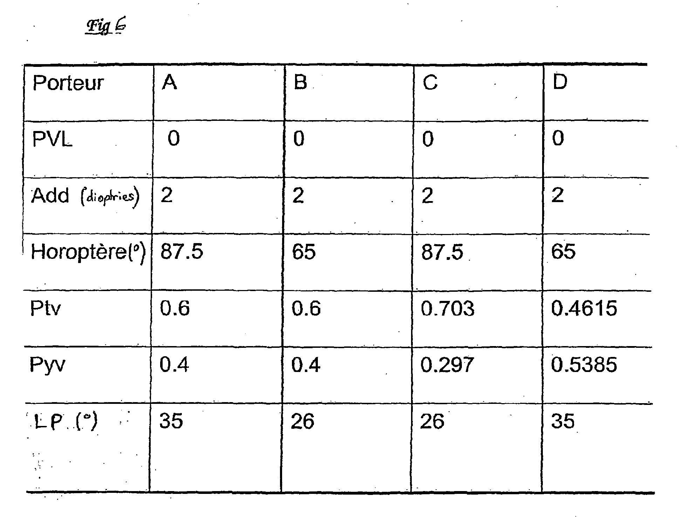

La figure 6 représente des exemples de ce que pourrait être un tel bon de commande utilisable par un opticien. Un tel bon de commande réunirait les données de puissance prescrite en vision de loin ($P_{VL}$), d'addition prescrite (A), d'horoptère vertical en vision de près (H) et d'abaissement du regard (R) mesurés en vision de près, et de coefficient de participation vertical de la tête (Ptv) mesuré en vision de près. L'horoptère vertical en vision de près, l'abaissement du regard et le coefficient de participation vertical de la tête sont mesurés par l'opticien ou l'ophtalmologiste au moyen d'un équipement tel que décrit ci dessus. Le coefficient de participation vertical des yeux (Pyv) se déduit alors comme le complément à 1 du coefficient de participation vertical de la tête et la longueur de progression LP peut être calculée selon la relation LP= H (1- Ptv). Pour toute case non remplie du bon de commande, la valeur standard moyenne utilisée dans les programmes de calculs existant serait retenue.

Pour faciliter la comparaison, tous les porteurs ont la même prescription VL et la même addition prescrite. Seules leurs caractéristiques posturales varient. Deux porteurs (A et C) ont un horoptère vertical en vision de prés de 87.5° et les 2 autres (B et D) ont un horoptère vertical en vision de prés de 65°. Les porteurs A et B ont un coefficient de participation de la tête égal à 0.6, le porteur C a un coefficient de participation de la tête voisin de 0.7 et pour le porteur D, ce coefficient est voisin de 0.46. Ces valeurs ont été mesurées selon les méthodes décrites plus haut en positionnant chaque porteur dans un environnement de lecture d'un document en vision de près et en mesurant l'angle moyen dont la tête est abaissée pour parcourir le document et/ou en mesurant l'angle moyen dont les yeux sont abaissés pour parcourir le document ; et en mesurant l'angle formé par le document avec un plan horizontal. Ces mesures permettent de déterminer pour chaque porteur sa longueur de progression LP requise.

Chaque exemplaire de ces bons de commande renseigne le programme de calcul par optimisation optique afin de calculer la paire de lentilles et d'éditer l'ordre de fabrication qui commande la machine à usinage direct.

Les lentilles ainsi fabriquées permettront de respecter la posture naturelle du porteur lui offrant ainsi un meilleur confort visuel et postural.

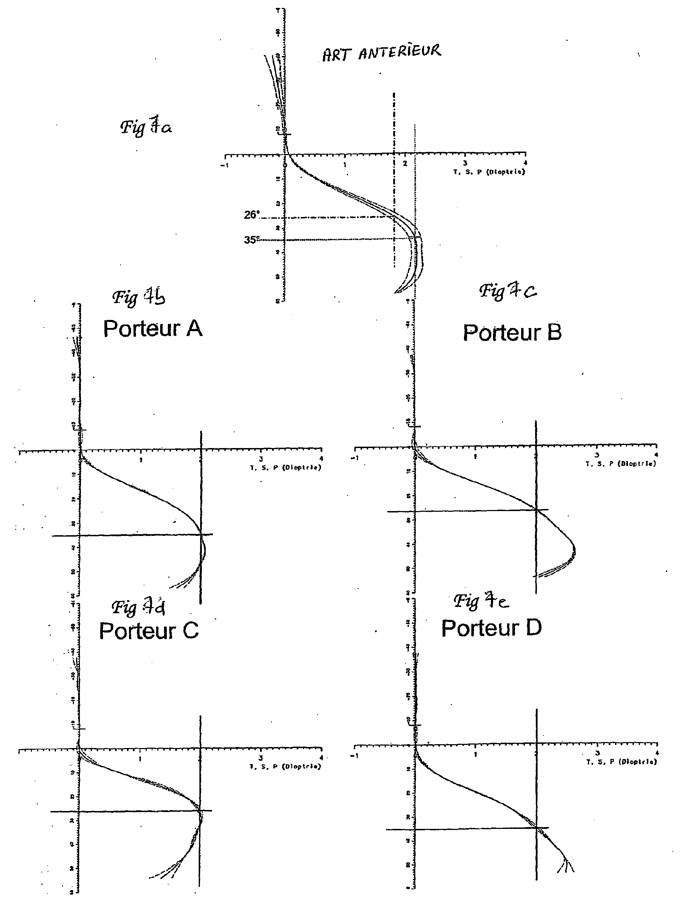

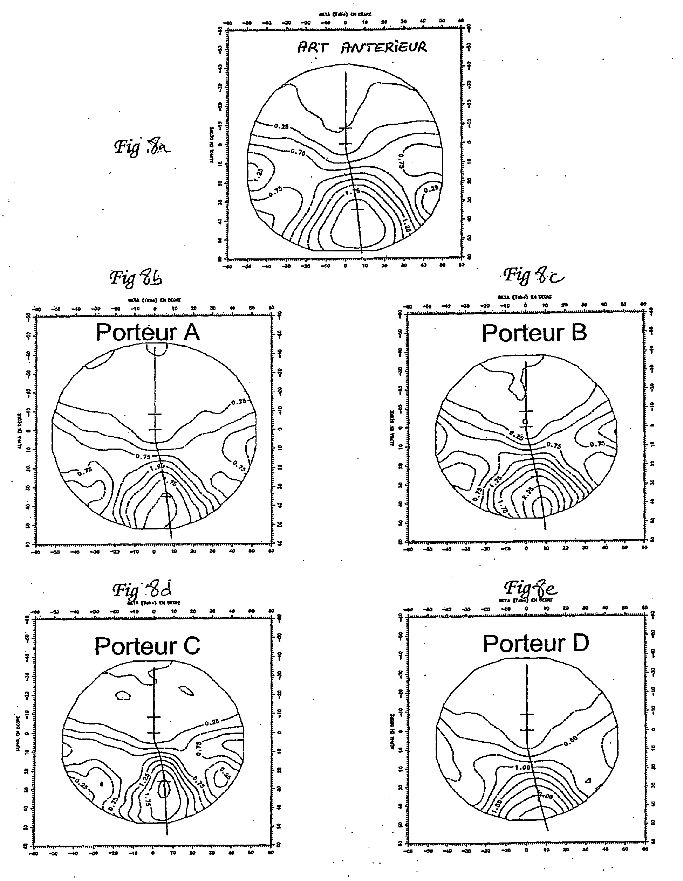

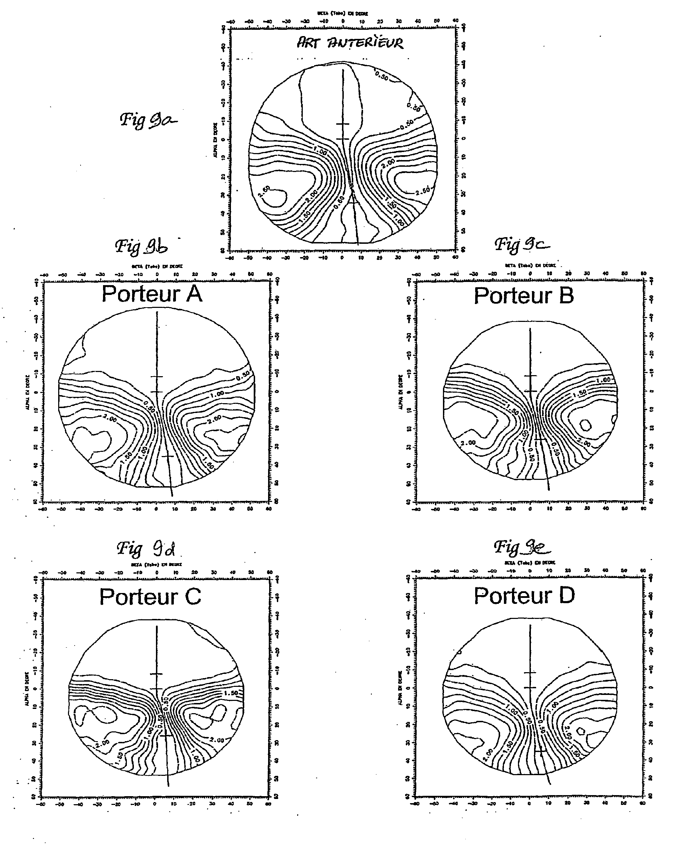

Les figures 7a à 7e représentent des profils de méridienne. La figure 7a correspond à une lentille de l'art antérieur, notamment une lentille commercialisée par la demanderesse sous la marque Varilux Comfort®. Les figures 7b à 7d correspondent à des lentilles obtenues selon le procédé de l'invention et correspondant respectivement aux porteurs A, B, C et D des prescriptions retenues dans le tableau de la figure 6. Les figures 8a à 8b et 9a à 9d représentent les caractéristiques optiques des lentilles des figures 7a à 7d ; soit des cartes de puissance porteur pour la série des figures 8 et des cartes d'astigmatisme résultant pour la série des figures 9.

La figure 7a montre les défauts de puissance occasionnés par la lentille de l'art antérieur pris pour comparaison si ces porteurs ne modifient pas leur comportement postural. La lentille de la figure 7a correspond en effet à un verre généraliste déterminé à partir de valeurs standard moyennes.

Les figures 7b à 7e, correspondant aux exemples de réalisation selon l'invention, montrent que l'addition prescrite est bien atteinte à -35° d'élévation oculaire pour les porteurs A et D (figures 7b et 7e) et à 26° pour les porteurs B et C (figures 6c et 6d). Par ailleurs, comme les porteurs A et C présentent un horoptère vertical en vision de prés voisin de 90°, la distance au document varie très peu quand ils baissent le tête et les yeux pour parcourir le document du haut vers le bas. La puissance requise autour du point VP varie donc très peu (figures 7b et 7d). Par contre, pour les porteurs B et D qui ont une valeur d'horoptère vertical en vision de prés faible et éloignée de 90°, la lecture du document du haut vers le bas entraîne une variation de la distance des yeux au document du fait d'un abaissement de la tête. La puissance requise pour ces porteurs augmente donc en dessous du point VP ; de 0.04 dioptrie par degré en moyenne entre 26 et 42° pour le porteur B pour atteindre 2.63 dioptries à 42° (figure 7c) et de 0.037 dioptrie par degré entre 35 et 49° pour atteindre 2.50 dioptries à 50° environ pour le porteur D (figure 7e).

La variation de la puissance le long de la méridienne sur les lentilles obtenues avec le procédé de l'invention est donc contrôlée en fonction de l'abaissement des yeux Y et de la distance du point objet visé qui dépendent de la valeur de l'abaissement du regard R en vision de près - ou de l'horoptère vertical mesuré en vision de près sur ledit porteur- et de la participation des yeux et/ou de la tête dudit porteur dans l'abaissement du regard en vision de près. La variation de puissance le long de la méridienne pour une lentille personnalisée aux besoins d'un porteur donné, telle que proposée par l'invention, présente donc une longueur de progression contrôlée et personnalisée, ainsi qu'une variation de puissance contrôlée et personnalisée en dessous du point de référence en vision de près.

Ainsi, pour un porteur présentant un horoptère vertical en vision de prés voisin de 90°, la distance au document varie très peu quand il baisse la tête et les yeux pour parcourir le document du haut vers le bas ; la lentille progressive présentera donc une méridienne de progression avec une dérivée nulle pour un abaissement du regard compris entre 85° et 90° (figures 7b et 7d). De même, pour un porteur présentant un horoptère vertical en vision de prés faible et éloignée de 90°, la lecture du document du haut vers le bas entraîne une variation de la distance des yeux au document du fait d'un abaissement de la tête ; la puissance optique le long de la méridienne de progression de la lentille augmentera au-delà du point de référence en vision de près pour un abaissement du regard inférieur à 85° (figures 7c et 7e). Un porteur positionnera aussi son document différemment en fonction de son horoptère vertical en vision de près ; le haut du document sera plus éloignée du centre de rotation de la tête pour un porteur avec un horoptère vertical faible que pour un porteur avec un horoptère vertical proche de 90°.

On constate aussi sur les figures 8a à 8e que la variation de puissance optique est sensiblement symétrique par rapport à la méridienne quel que soit le profil de la méridienne considéré. On peut noter des variations de position de cette méridienne en fonction de la longueur de progression (figures 8b et 8d) et, pour une longueur de progression donnée, en fonction de l'horoptère vertical en vision de près du porteur. Ces différences de position des méridiennes des différentes lentilles données en exemple sont particulièrement visibles en dessous du point de référence en vision de près VP (figures 8c et 8d) du fait de la diminution de la distance des yeux au document entraînée par l'abaissement de la tête dans le cas d'un horoptère vertical en vision de près de faible valeur.

De plus, l'astigmatisme résultant (figures 9ba à 9e) définit un couloir d'autant plus large en vision de près que la puissance le long de la méridienne varie moins vite (figures 9b et 9d). Pour ces exemples de réalisation, la distribution des astigmatismes résultants est aussi symétrique par rapport à la méridienne que pour le verre de l'art antérieur, mais une zone de vision de loin très dégagée et une valeur maximale de l'astigmatisme maximale moindre ont été privilégiées par rapport à l'art antérieur afin d'améliorer le confort global des porteurs quelles que soient leurs caractéristiques posturales.

Le procédé de l'invention permet donc de déterminer une lentille ophtalmique progressive par optimisation optique en utilisant comme cible une variation contrôlée de la puissance le long de la méridienne principale de progression ; cette variation de puissance sur la méridienne dépend de paramètres physiologiques du porteur mesurés en vision de près. La lentille selon l'invention, ainsi obtenue, répond donc mieux aux besoins du porteur et lui apporte un meilleur confort visuel.

**Revendications**

1. Procédé de détermination d'une lentille ophtalmique progressive pour un porteur donné auquel une addition de puissance (A) a été prescrite en vison de près, la lentille présentant une croix de montage matérialisant la direction primaire du regard dans les conditions du porté et une méridienne principale de progression entre une zone de vision de loin et une zone de vision de près, le procédé comprenant les étapes de :

   - mesure de l'abaissement du regard (R) du porteur sur un point visé en vision de près ;
   - mesure d'un horoptère (H) vertical du porteur en vision de près comme l'angle que fait l'abaissement du regard (R) avec un document contenant le point visé, ledit document formant un angle (B) avec l'horizontale ;
   - mesure de l'élévation de la tête (T) et/ou de l'élévation des yeux (Y) du porteur en vision de près ;
   - détermination d'un coefficient de participation vertical de la tête en vision de près ($Ptv_{vp}$) défini comme le rapport de l'élévation de la tête (T) sur l'abaissement du regard (R), $Ptv_{vp} = T/(R+B)$ ;
   - détermination d'une longueur de progression (LP) spécifique au porteur définie par la relation $LP = H (1- Ptv_{vp})$, la longueur de progression étant définie comme l'angle d'abaissement des yeux entre la croix de montage (CM) et le point de la méridienne pour lequel la puissance atteint l'addition de puissance (A) ;
   - détermination de la lentille par optimisation en calcul optique dans les conditions du porté, en utilisant comme cible une variation de puissance le long de la méridienne avec une longueur de progression égale à ladite longueur de progression spécifique au porteur.

2. Le procédé de la revendication 1, dans lequel l'étape de mesure de l'abaissement du regard (R) comprend les étapes de :

   - positionnement du porteur en lecture d'un document en vision de près ;
   - mesure de l'angle moyen dont la tête est abaissée pour parcourir le document et/ou mesure de l'angle moyen dont les yeux sont abaissés pour parcourir le document ;
   - identification du point visé par le porteur ;
   - mesure de l'angle formé entre un plan horizontal de l'espace et le plan contenant le point visé et les centres de rotation des yeux.

3. Le procédé de la revendication 1 ou 2, dans lequel l'étape de mesure de l'abaissement du regard et l'étape de mesure de l'horoptère vertical sont confondues, le document contenant le point visé par le porteur étant positionné à plat sur un support horizontal.

**Claims**

1. Method for determining a progressive ophthalmic lens for a given wearer to whom a near-vision power addition (A) has been prescribed, the lens having a fitting cross marking the primary direction of gaze under wearing conditions, and a principal progression meridian between a far-vision zone and near-vision zone, the method comprising the steps of:

- measuring the lowering of gaze (R) of the wearer on a near-vision point aimed at;
- measuring a near-vision vertical horopter (H) as the angle made by the lowering of gaze (R) with a document containing the point aimed at, said document forming an angle (B) with the horizontal;
- measuring the near-vision elevation of the head (T) and/or the elevation of the eyes (Y) of the wearer;
- determination of a near-vision vertical coefficient of participation of the head ($PtV_{nv}$,) defined as the ratio of the elevation of the head (Hd) to the lowering of gaze (V), $Ptv_{nv} = Hd/(V+B)$;
- determination of a progression length (LP) specific to the wearer, defined by the relationship $LP = H (1- PtV_{nv})$, the progression length being defined as the angle of lowering of the eyes between the fitting cross (CM) and the point of the meridian for which the power reaches the power addition (A);
- determination of the lens by optimization by optical calculation under wearing conditions, by using as target a power variation along the meridian with a progression length equal to said progression length specific to the wearer.

2. The method of claim 1, in which the step of measuring the lowering of gaze (R) comprises the steps of:

- positioning the wearer reading a document in near vision;
- measuring the average angle by which the head is lowered to scan the document and/or measuring the average angle by which the eyes are lowered to scan the document;
- identification of the point aimed at by the wearer;
- measuring the angle formed between a horizontal plane of the space and the plane containing the point aimed at and the centres of rotation of the eyes.

3. The method of claim 1 or 2, in which the step of measuring the lowering of gaze and the step of measuring the vertical horopter are combined, the document containing the point aimed at by the wearer being positioned flat on a horizontal support.

**Patentansprüche**

1. Verfahren zum Bestimmen einer ophthalmischen Gleitsichtlinse für einen bestimmten Träger, dem ein Nahsicht-Brechzusatz (A) verschrieben wurde, wobei die Linse ein Montagekreuz aufweist, das die Primärrichtung des Blicks unter Tragbedingungen und einen Hauptprogressionsmeridian zwischen einem Fernsichtbereich und einem Nahsichtbereich markiert, wobei das Verfahren folgende Schritte umfasst:

- Messen des Senkens des Blickes (R) des Trägers auf einen anvisierten Punkt bei Nahsicht;
- Messen eines senkrechten Horopters (H) des Trägers bei Nahsicht als Winkel, den das Senken des Blickes (R) zu einem Schriftstück, das den anvisierten Punkt enthält, bildet, wobei das Schriftstück einen Winkel (B) zur Waagerechten bildet;
- Messen der Höhe des Kopfes (T) und/oder der Höhe der Augen (Y) des Trägers bei Nahsicht;
- Bestimmen eines senkrechten Beitragskoeffizienten des Kopfes bei Nahsicht ($Ptv_{vp}$), der als das Verhältnis der Höhe des Kopfes (T) zur Senkung des Blickes (R), $Ptv_{vp} = T/(R+B)$, definiert ist;
- Bestimmen einer für den Träger spezifischen Progressionslänge (LP), die durch das Verhältnis $LP = H (1- Ptv_{vp})$ definiert ist, wobei die Progressionslänge als Winkel des Senkens der Augen zwischen dem Montagekreuz (CM) und dem Punkt des Meridians, für den die Brechkraft den Brechzusatz (A) erreicht, definiert ist;
- Bestimmen der Linse durch eine optische Berechnungsoptimierung unter Tragbedingungen, wobei als Ziel eine Brechkraftänderung an dem Meridian entlang mit einer Progressionslänge gleich der für den Träger spe-zifischen Progressionslänge verwendet wird.

2. Verfahren nach Anspruch 1, wobei der Schritt des Messens des Senkens des Blickes (R) folgende Schritte umfasst:

- Positionieren des Trägers beim Lesen eines Schriftstücks bei Nahsicht;
- Messen des durchschnittlichen Winkels, in dem der Kopf gesenkt ist, um das Schriftstück durchzulesen, und/oder Messen des durchschnittlichen Winkels, in dem die Augen gesenkt sind, um das Schriftstück durchzulesen;
- Identifizieren des von dem Träger anvisierten Punktes;
- Messen des Winkels, der zwischen einer waagerechten Ebene des Raums und der Ebene, die den anvisierten Punkt und die Drehzentren der Augen enthält, gebildet wird.

**3.** Verfahren nach Anspruch 1 oder 2, wobei der Schritt des Messens des Senkens des Blickes und der Schritt des Messens des senkrechten Horopters zusammenfallen, wobei das Schriftstück, das den Punkt enthält, der von dem Träger anvisiert wird, flach auf einer waagerechten Unterlage liegt.

Fig 1

Fig 2

Fig 3

Verre: Plan Add 2.0

Horopt = Cst = 70°

Add (δ)

- – –ptv=0.3, B.VP=49
– - – -ptv=0.4, B.VP=42
·······ptv=0.5, B.VP=35
– – – -ptv=0.6, B.VP=28
———ptv=0.7, B.VP=21

Elévation yeux (°)

Fig 4

Dioptries PROFIL DE MERIDIENNE pour DIFFERENTS HOROPTERES
Inclinaison Tête = cste = -40°
Verrres: plan, Addition 2

———h=88
·······h=80
– - – -h=70
– – -h=60

Elévation oculaire (°)

*Fig 5*

Profil de méridienne pour les 12 sujets décalage
(addition ramenée à 2 pour tous)

Addition nominale

| | | |
|---|---|---|
| ·· | h=81,ptv=.58 | 1 |
| — — | h=56,ptv=.53 | 2 |
| — — · | h=77,ptv=.63 | 3 |
| — — | h=67,ptv=.50 | 4 |
| —— | h=56,ptv=.59 | 5 |
| — · · | h=67,ptv=.49 | 6 |
| ▲ | h=71,ptv=.60 | 7 |
| — · | h=71,ptv=.58 | 8 |
| + | h=60,ptv=.60 | 9 |
| — · · — | h=62,ptv=.47 | 10 |
| — · — · · | h=74,ptv=.66 | 11 |
| —— | h=64,ptv=.60 | 12 |

Elévation oculaire (°)

Fig 6

| Porteur | A | B | C | D |
|---|---|---|---|---|
| PVL | 0 | 0 | 0 | 0 |
| Add (diophries) | 2 | 2 | 2 | 2 |
| Horoptère(°) | 87.5 | 65 | 87.5 | 65 |
| Ptv | 0.6 | 0.6 | 0.703 | 0.4615 |
| Pyv | 0.4 | 0.4 | 0.297 | 0.5385 |
| LP (°) | 35 | 26 | 26 | 35 |

ART ANTERIEUR

Fig 4a

26°
35°

T. S. P (Dioptrie)

Fig 4b

Porteur A

Fig 4c

Porteur B

T. S. P (Dioptrie)

T. S. P (Dioptrie)

Fig 4d

Porteur C

Fig 4e

Porteur D

T. S. P (Dioptrie)

T. S. P (Dioptrie)

Fig 8a

ART ANTERIEUR

Fig 8b

Porteur A

Fig 8c

Porteur B

Fig 8d

Porteur C

Fig 8e

Porteur D

*Fig 9a*

*Fig 9b*

*Fig 9c*

Porteur A

Porteur B

*Fig 9d*

*Fig 9e*

Porteur C

Porteur D

18

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2699294 A
- US 5270745 A
- US 5272495 A
- FR 2683642 A
- FR 2704327 A
- WO 9812590 A
- EP 0990939 A
- FR 0409144
- FR 2683643 A
- FR 2858693 A

**Littérature non-brevet citée dans la description**

- **CLIFTON M. SCHOR ; KENNETH J. CIUFFREDA.** *Vergence eye movements : Basic & clinical aspects,* 1983, 557